# EUROPEAN PATENT APPLICATION

(11) **EP 4 769 700 A2**
(43) Date of publication of application: **01.07.2026**
(21) Application number: 25213152.9
(22) Date of filing: 03.11.2025
(51) Int. Cl.: H01M 50/184, H01M 50/188

(54) **BATTERY CELL, BATTERY MODULE INCLUDING THE SAME, AND METHOD OF MANUFACTURING CELL CASE**

(30) Priority: 31.12.2024 KR 20240201935
(71) Applicant: SK On Co., Ltd., Seoul 03161 (KR)
(72) Inventor: KWAK, Seung Ho, 34124 Daejeon (KR)
(74) Representative: Prüfer & Partner mbB Patentanwälte · Rechtsanwälte

(57) **Abstract**

A battery cell includes a cell case including a side wall providing an accommodation space and an upper plate having a through-hole formed therein, an electrode assembly disposed in the accommodation space of the cell case, a first current collector electrically connected to a first electrode tab of the electrode assembly, an electrode terminal electrically connected to the first current collector through the through-hole, and a gasket disposed between the electrode terminal and the upper plate and having electrical insulation properties. The upper plate includes a protrusion protruding in one direction along an edge of the through-hole and a recessed portion recessed in the one direction.

## Description

### TECHNICAL FIELD

The disclosure and implementations disclosed in this patent document generally relate to a battery cell capable of being charged and discharged, a battery module including the same, and a method of manufacturing a cell case.

### BACKGROUND

Secondary battery cells, unlike primary batteries, offer the convenience of being dischargeable and rechargeable, and are attracting significant attention as power sources for various mobile devices, electric vehicles, energy storage devices, and the like.

Secondary battery cells may be manufactured as pouch-type or can-type cells. Pouch-type cells house the electrode assembly within a flexible cell case (pouch). Can-type cells house the electrode assembly within a rigid cell case (can) and may be configured in cylindrical, prismatic, or coin-shaped forms, or the like.

### SUMMARY

A secondary battery cell includes an electrode assembly and a cell case housing the electrode assembly. The electrode assembly is connected to a current collector, and the current collector is electrically connected to an electrode terminal. After the electrode terminal and a gasket are inserted through a through-hole in the cell case, the electrode terminal deforms, allowing the cell case and the electrode terminal to be riveted together. During this process, the force applied to the electrode terminal may cause dimensional errors in the electrode terminal. Furthermore, the gasket between the cell case and the electrode terminal may be compressed by a deformation portion of the electrode terminal to form a seal. However, simply installing the gasket has limited the ability to obtain sealing.

The present disclosure can be implemented in some embodiments to provide a cell case in which the sealing ability of a gasket may be enhanced.

According to an aspect of the present disclosure, dimensional errors in the electrode terminal that occur during the process of coupling the electrode terminal and the cell case may be reduced.

The battery cell in the present disclosure, the battery module including the same, and the method of manufacturing a cell case may be widely applied to devices within green technology fields such as electric vehicles, battery charging stations, and other battery-based solar and wind power generation devices. In addition, the battery cell in the present disclosure, the battery module including the same, and the method of manufacturing a cell case may be used in eco-friendly electric vehicles, hybrid vehicles, and the like, which aim to prevent climate change by suppressing air pollution and greenhouse gas emissions.

In some preferred embodiments of the present disclosure, a battery cell includes a cell case including a side wall providing an accommodation space and an upper plate having a through-hole formed therein; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties. The upper plate includes a protrusion protruding in one direction along an edge of the through-hole and a recessed portion recessed in the one direction.

In a preferred embodiment, the protrusion may protrude in a first direction that is toward an inside of the cell case, and the recessed portion may be recessed in the first direction.

In a preferred embodiment, the protrusion may be provided on an inner side surface of the upper plate, and the recessed portion may be formed on an outer side surface of the upper plate.

In a preferred embodiment, the gasket may have a thickness of a portion in the first direction in contact with the protrusion, smaller than a thickness of a portion in the first direction in contact with an inner side surface of the upper plate.

In a preferred embodiment, the gasket may have a thickness of a portion in the first direction in contact with the recessed portion, larger than a thickness of a portion in the first direction in contact with an outer side surface of the upper plate.

In a preferred embodiment, the protrusion may protrude in a second direction that is toward an outside of the cell case, and the recessed portion may be recessed in the second direction.

In a preferred embodiment, the protrusion may be provided on an outer side surface of the upper plate, and the recessed portion may be formed on an inner side surface of the upper plate.

In a preferred embodiment, the gasket may have a thickness in the second direction of a portion in contact with the protrusion, smaller than a thickness in the second direction of a portion in contact with an outer side surface of the upper plate.

In a preferred embodiment, the gasket may have a thickness in the second direction of a portion in contact with the recessed portion, larger than a thickness in the second direction of a portion in contact with an inner side surface of the upper plate.

In a preferred embodiment, the gasket may be coupled to the through-hole to surround an outer peripheral surface of the protrusion and the recessed portion.

In a preferred embodiment, the side wall may include a circular tube shape, the upper plate may include a circular plate shape covering one side of the accommodation space, and the cell case may be provided by integrating the side wall and the upper plate.

In a preferred embodiment, the electrode terminal may be riveted to the through-hole of the cell case.

In some preferred embodiments of the present disclosure, a method of manufacturing a cell case includes a first punching operation of forming a first hole in an upper plate of the cell case; forming a preliminary protrusion and a preliminary recessed portion in the upper plate; and a second punching operation of forming a second hole, performed after the forming.

In a preferred embodiment, a diameter of the second hole may be larger than a diameter of the first hole.

In some preferred embodiments of the present disclosure, a battery module includes a plurality of battery cells; and a module housing accommodating the plurality of battery cells. At least one of the plurality of battery cells includes a cell case including a side wall providing an accommodation space and an upper plate having a through-hole formed therein; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties. The upper plate includes a protrusion protruding in one direction along an edge of the through-hole and a recessed portion recessed in the one direction.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment.
FIG. 2 is an exploded perspective view of the battery cell illustrated in FIG. 1.
FIG. 3 is a cross-sectional view taken along line I-I' of FIG. 1.
FIG. 4 is a cutaway perspective view of portion A of FIG. 2.
FIG. 5 is an enlarged cross-sectional view of portion B of FIG. 3.
FIG. 6 is a cross-sectional view illustrating another preferred embodiment of FIG. 5.
FIG. 7 is a flowchart of a method of manufacturing a cell case according to a preferred embodiment.
FIGS. 8A, 8B, 8C and 8D are schematic diagrams illustrating a method of manufacturing a cell case according to a preferred embodiment.
FIG. 9 is a perspective view of a battery module according to a preferred embodiment.

### DETAILED DESCRIPTION

Features of the present disclosure disclosed in this patent document are described by example embodiments with reference to the accompanying drawings.

The same reference numbers or symbols in respective drawings attached to this specification indicate parts or components that perform substantially the same functions. For convenience of explanation and understanding, the same reference numbers or symbols may be used in different embodiments. In detail, even if components with the same reference numbers are depicted in multiple drawings, the multiple drawings do not all represent one embodiment.

In the following description, the singular expression includes plural expressions unless the context clearly indicates otherwise. Terms such as "include", "comprise", "configure," etc. indicate the presence of features, numbers, steps, operations, components, parts, or combinations thereof described in the specification, but should be understood as not excluding the possibility of the presence or addition of one or more other features, numbers, steps, operations, components, parts, or combinations thereof.

Furthermore, in the following description, terms such as "top," "upper," "on," "lower," "bottom," "below," "side," "front," "back," "rear," etc. are expressed based on the directions depicted in the drawings, and it should be noted in advance that the expressions may vary depending on the orientation of the object.

Additionally, terms including ordinal numbers, such as "first," "second," etc., may be used in this specification and claims to distinguish between components. These ordinal numbers are used to distinguish identical or similar components from each other, and the use of these ordinal numbers should not be interpreted as limiting the meaning of the terms. For example, the order of use or disposition of components associated with these ordinal numbers should not be construed as being limited by their numbers. If necessary, respective ordinal numbers may be used interchangeably.

Hereinafter, the present disclosure will be described in detail with reference to the accompanying drawings.

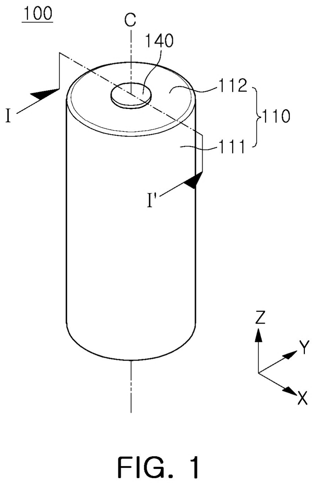

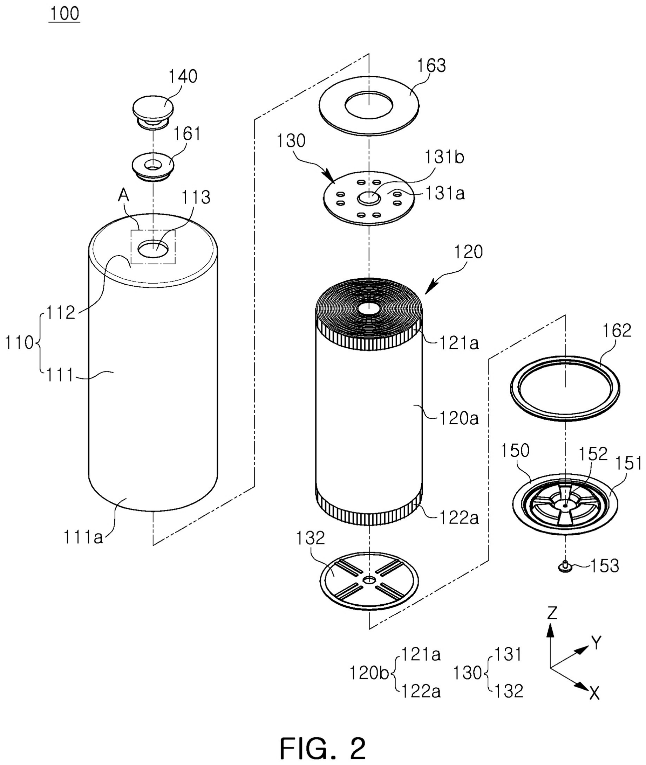

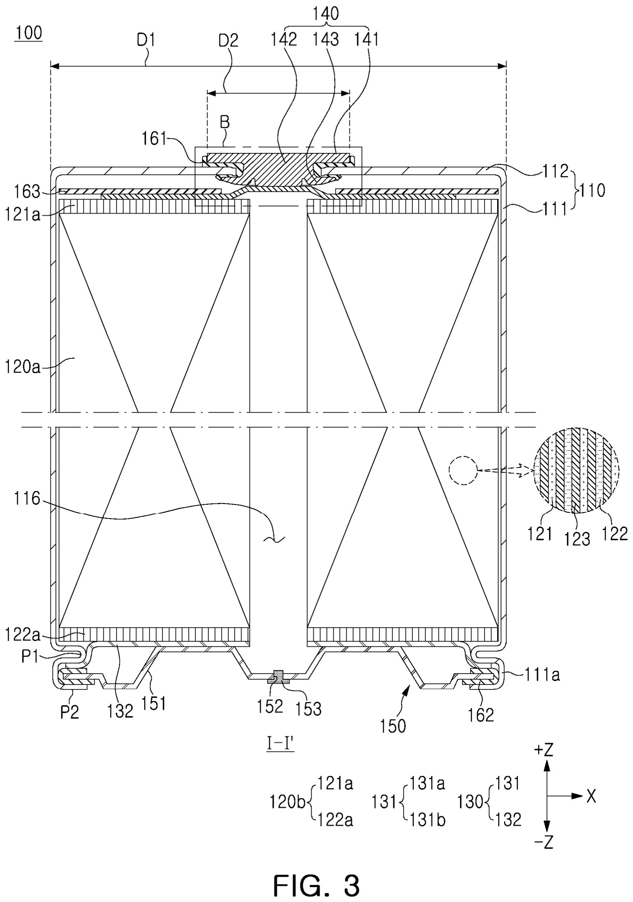

FIG. 1 is a perspective view of a battery cell according to a preferred embodiment. FIG. 2 is an exploded perspective view of the battery cell illustrated in FIG. 1. FIG. 3 is a cross-sectional view taken along line I-I' of FIG. 1.

Referring to FIGS. 1 to 3, a battery cell 100 according to a preferred embodiment may include a cell case 110 including a side wall 111 forming an accommodation space 116 inside the cell case and an upper plate 112 having a through-hole 113 formed therein, an electrode assembly 120 disposed in the accommodation space 116 of the cell case 110, a first current collector 131 electrically connected to a first electrode tab 121a of the electrode assembly 120, an electrode terminal 140 electrically connected to the first current collector 131 through the through-hole 113, and a gasket 161 disposed between the electrode terminal 140 and the through-hole 113 and having electrical insulation.

The battery cell 100 according to a preferred embodiment may be implemented as a cylindrical cell, but is not limited thereto. In this disclosure, a battery cell 100 according to a preferred embodiment will be described, using a cylindrical cell as an example.

The cell case 110 may include a side wall 111 forming an accommodation space 116 therein, and an upper plate 112 having a through-hole 113 formed therein. The accommodation space 116 may be formed by the side wall 111 and the upper plate 112 of the cell case 110. The cell case 110 may have a cylindrical shape with one side open. The cell case 110 may have a hollow cylindrical shape with a circular cross-section.

The side wall 111 may have a circular tube shape, and the upper plate 112 may have a circular plate shape covering one side of the accommodation space 116.

The side wall 111 may have a circular tube shape. The upper plate 112 may have an overall flat plate shape. The thicknesses of the upper plate 112 and the side wall 111 in the cell case 110 may vary. For example, the upper plate 112 and the side wall 111 may have the same thickness, and the thickness of the upper plate 112 may have a value greater than that of the thickness of the side wall 111. The cell case 110 may include a metal material such as aluminum or an aluminum alloy, but the material of the cell case 110 may vary.

As illustrated in FIGS. 1 to 3, the cell case 110 may be formed by integrally forming the side wall 111 and the upper plate 112. For example, the cell case 110 may be manufactured by deep drawing a metal sheet to form an integral shape with the side wall 111 and the upper plate 112. When the cell case 110 is formed integrally, the process of joining the side wall 111 and the upper plate 112 is not required, thereby facilitating the manufacturing of the cell case 110 and/or the battery cell 100, and improving workability.

However, the cell case 110 of the present disclosure is not limited to a configuration in which the side wall 111 and the upper plate 112 are formed integrally. For example, the side wall 111 and the upper plate 112 may also be manufactured separately and then joined or bonded to each other by welding or the like.

A through-hole 113 may be formed in the upper plate 112 of the cell case 110. The through-hole 113 may be provided for coupling of the electrode terminal 140. The cell case 110 has a circular cross-sectional shape, and the through-hole 113 may be formed in the center of the upper plate 112. In this case, the electrode terminal 140 coupled to the through-hole 113 may be disposed at the center of the upper plate 112.

The electrode terminal 140 may be coupled to the through-hole 113. At least a portion of the electrode terminal 140 may be exposed to the outside of the cell case 110. In addition, at least a portion of the electrode terminal 140 may be disposed in the accommodation space 116 of the cell case 110 and may be electrically connected to the first current collector 131. For example, the electrode terminal 140 may pass through the through-hole 113 and be electrically connected to the first current collector 131. Therefore, when the first current collector 131 is connected to the cathode, the electrode terminal 140 may correspond to the cathode terminal, and vice versa.

The electrode terminal 140 may be riveted to the through-hole 113 of the cell case 110. The electrode terminal 140 may be riveted to the upper plate 112 while inserted into the through-hole 113 of the upper plate 112. The electrode terminal 140 may be riveted to the upper plate 112 of the cell case 110. The electrode terminal 140 may have an overall rivet shape.

The electrode terminal 140 may include a first portion 141 disposed on the upper side of the upper plate 112, a second portion 142 extending downward from the first portion 141 and passing through the through-hole 113, and a third portion 143 extending from the second portion 142 and disposed on the lower side of the upper plate 112. The first portion 141 may be disposed on the outside of the cell case 110, and the third portion 143 may be disposed in the accommodation space 116 of the cell case 110. The third portion 143 may be deformed by pressure and may have a shape extending radially outwardly of the cell case 110. The upper plate 112 may be disposed between the first portion 141 and the third portion 143. The outer diameter D2 of the first portion 141 and the outer diameter of the third portion 143 may have a value greater than the diameter of the through-hole 113, and the outer diameter of the second portion 142 may have a value smaller than the diameter of the through-hole 113. The outer diameter D2 of the first portion 141 may have a value smaller than the outer diameter D1 of the cell case 110. The outer diameter D2 of the first portion 141 may be set considering the welding space with the bus bar connected to the first portion 141.

A gasket 161 may be disposed between the electrode terminal 140 and the upper plate 112 to provide insulation between the electrode terminal 140 and the upper plate 112. The gasket 161 may include an electrically insulating material. The gasket 161 may serve as a sealing member that seals the space between the electrode terminal 140 and the upper plate 112.

The electrode terminal 140 may be inserted into the through-hole 113 on the outside of the upper plate 112. Since the outer diameter D2 of the electrode terminal 140 is larger than the diameter of the through-hole 113, the first portion 141 of the electrode terminal 140 may be disposed on the outside of the upper plate 112. The third portion 143 is deformed by riveting, thereby securing the electrode terminal 140 to the upper plate 112.

When riveting is performed with the gasket 161 disposed on the outer surface of the electrode terminal 140, the gasket 161 may be disposed between the electrode terminal 140 and the upper plate 112. The gasket 161 may seal and/or insulate between the electrode terminal 140 and the upper plate 112.

The electrode assembly 120 may be disposed in the accommodation space 116 of the cell case 110. The electrode assembly 120 may include a cathode, an anode, and a separator 123. The cathode and the anode may each include a current collector foil (or metal foil) and a mixture layer applied to at least one surface of the current collector foil. The mixture layer may include an active material. A separator 123 may be interposed between the cathode and the anode to electrically insulate the cathode and the anode. The cathode, anode, and separator 123 may be repeatedly disposed to form an electrode assembly 120. As an example, the electrode assembly 120 may have a winding shape in which the cathode, separator 123, and anode are stacked and wound. However, the electrode assembly 120 is not limited to the winding structure. For example, the electrode assembly 120 may also have a stacking shape, a zigzag-folding shape, or a stack-folding shape.

The electrode assembly 120 may include a first electrode 121 and a second electrode 122 with different polarities. For example, the first electrode 121 may serve as a cathode and the second electrode 122 may serve as an anode, or vice versa.

The electrode assembly 120 may include a body 120a in which the first electrode 121 and the second electrode 122 are arranged with a separator 123 interposed therebetween, and an electrode tab 120b extending from the first electrode 121 or the second electrode 122. The body 120a may include a coated portion on which an active material is applied, and the electrode tab 120b may include a non-coated portion on which no active material is applied. The electrode tab 120b may have a shape that is overlapped or laid down in a certain manner.

The electrode tab 120b may include a first electrode tab 121a extending from the first electrode 121 and a second electrode tab 122a extending from the second electrode 122. The first electrode tab 121a may include an uncoated portion of the first electrode 121, and the second electrode tab 122a may include an uncoated portion of the second electrode 122.

The electrode tab 120b may be electrically connected to the current collector 130. The current collector 130 may include a first current collector 131 and a second current collector 132. The first electrode tab 121a may be electrically connected to the first current collector 131. For example, the first electrode tab 121a and the first current collector 131 may be electrically connected to each other by welding or the like. The second electrode tab 122a may be electrically connected to at least one of the second current collector 132, the cap plate 150, or the side wall 111 of the cell case 110. For example, the second electrode tab 122a and the second current collector 132 may be electrically connected to each other by contacting each other, and may be joined to each other by welding, such as ultrasonic welding or laser welding. However, the method of joining the second electrode tab 122a and the second current collector 132 is not limited thereto.

At least a portion of the first current collector 131 may be electrically connected to the first electrode tab 121a of the electrode assembly 120. Furthermore, at least a portion of the first current collector 131 may be electrically connected to the electrode terminal 140. For example, the first current collector 131 and the first electrode tab 121a may be joined together by welding, such as ultrasonic welding, laser welding, or resistance welding. However, the joining method is not limited thereto. The first current collector 131 and the electrode terminal 140 may be joined together by welding, such as laser welding.

The first current collector 131 may include a main body 131a electrically connected to the first electrode tab 121a of the electrode assembly 120 and a central portion 131b protruding from the center and electrically connected to the electrode terminal 140.

The main body 131a of the first current collector 131 may be welded to the first electrode tab 121a. The main body 131a may be joined to the first electrode tab 121a by laser welding, ultrasonic welding, resistance welding, or the like, while being disposed to contact the first electrode tab 121a.

The central portion 131b of the first current collector 131 and the electrode terminal 140 may be welded together by laser welding or the like.

The main body 131a and the central portion 131b of the first current collector 131 may have an integrated structure.

To electrically insulate the first current collector 131 and the cell case 110, an electrically-insulating insulating member 163 may be disposed between the first current collector 131 and the cell case 110. For example, the insulating member 163 may be disposed between the first current collector 131 and the upper plate 112. The shape and disposing position of the insulating member 163 may vary.

The battery cell 100 according to a preferred embodiment may additionally include a cap plate 150 that covers the bottom side of the accommodation space 116 of the cell case 110. The cap plate 150 may be crimped or welded to the cell case 110.

The cap plate 150 may cover the accommodation space 116 on the side opposite the electrode terminal 140.

The cap plate 150 may be joined to the side wall 111 of the cell case 110 by crimping, welding, or other methods. For example, a beading process may be performed on the open end portion 111a of the side wall 111 of the cell case 110 to form a beaded portion P1. Then, the cap plate 150 may be placed on the beading portion P1, and the end portion 111a of the side wall 111 and the cap plate 150 may be crimped to form a crimped portion P2. Alternatively, the cap plate 150 may be joined to the end portion 111a of the side wall 111 by welding.

An injection port 152 may be formed in the cap plate 150 for injecting electrolyte into the interior of the cell case 110. The injection port 152 may be formed in the center of the body 151 of the cap plate 150, but the location and size thereof may be varied. The injection port 152 may be sealed with an injection port cap 153 after electrolyte injection.

A cap gasket 162 may be disposed between the cap plate 150 and the side wall 111 of the cell case 110 for sealing. The cap gasket 162 may serve as a sealing member that seals the space between the cap plate 150 and the side wall 111.

According to a preferred embodiment, a battery cell 100 may further include a cap plate 150 covering the bottom side of the accommodation space 116 of the cell case 110 and a second current collector 132 electrically connected to the second electrode tab 122a of the electrode assembly 120.

The upper surface of the second current collector 132 may be configured to be joined or in contact with the second electrode tab 122a to be electrically connected to the second electrode tab 122a. Welding may be used to join the second current collector 132 and the second electrode tab 122a. For example, the second current collector 132 and the second electrode tab 122a may be joined by ultrasonic welding, laser welding, resistance welding, or the like. Alternatively, the second current collector 132 may be electrically connected to the second electrode tab 122a without being joined.

The second current collector 132 may be electrically connected to at least one of the cap plate 150 or the side wall 111 of the cell case 110. FIG. 3 illustrates a configuration in which the second current collector 132 is electrically connected to the cap plate 150 and the side wall 111 of the cell case 110. In this case, the cap plate 150 and the cell case 110 may have a second polarity. For example, if the second electrode tab 122a is an anode tab, the cap plate 150 and the cell case 110 may be charged as anodes. The object electrically connected to the second current collector 132 may vary depending on the design specifications of the battery cell 100.

Meanwhile, a configuration in which the second electrode tab 122a is directly electrically connected to the cap plate 150 without disposing the second current collector 132 is also possible.

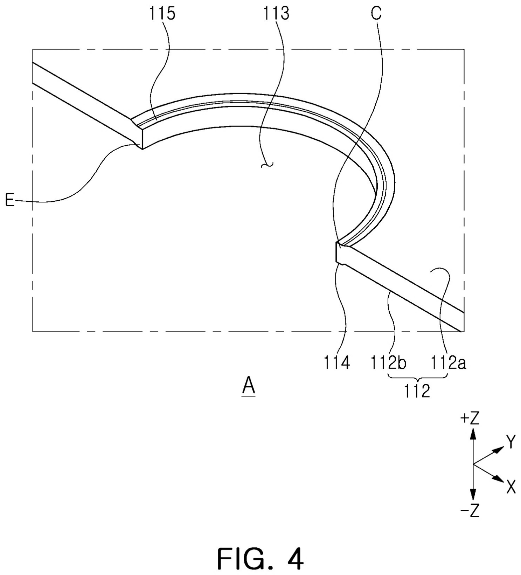

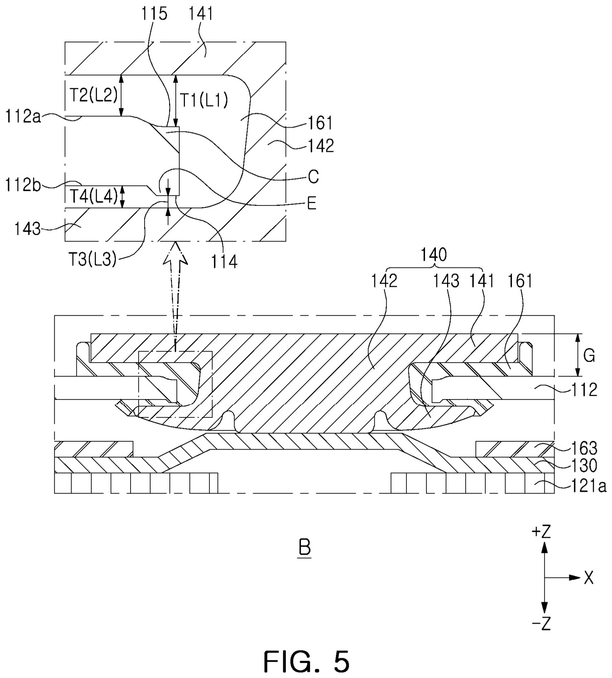

FIG. 4 is a cutaway perspective view of portion A of FIG. 2. FIG. 5 is an enlarged cross-sectional view of portion B of FIG. 3.

The descriptions of the cell case 110, electrode assembly 120, first current collector 131, electrode terminal 140, gasket 161, and insulating member 163 of FIGS. 1 to 3 may also be applied to FIGS. 4 and 5.

Referring to FIGS. 4 and 5, according to a preferred embodiment, the upper plate 112 may include a protrusion (E) protruding in one direction along the edge of the through-hole 113 and a recessed portion (C) recessed in the one direction. The protrusion (E) may compress the gasket 161 disposed between the electrode terminal 140 and the upper plate 112, thereby improving the sealing capability of the gasket 161. The recessed portion (C) may significantly reduce dimensional errors in the electrode terminal 140 that occur during the process of riveting the electrode terminal 140 to the upper plate 112.

In a preferred embodiment, one direction may be a direction toward the interior of the cell case 110. For example, the protrusion (E) may protrude in a first direction toward the interior of the cell case 110, and the recessed portion (C) may be recessed in the first direction.

In the drawing, the direction toward the interior of the cell case 110 may refer to the -Z direction. Conversely, the direction toward the exterior of the cell case 110 may refer to the +Z direction. In the following description, the direction toward the interior of the cell case 110 is referred to as the first direction, and the direction toward the exterior of the cell case 110 is referred to as the second direction.

In a preferred embodiment, a protrusion (E) may be formed on the inner side surface 112b of the upper plate 112. The protrusion (E) may be defined as a portion that protrudes toward the interior of the cell case 110 relative to the inner side surface 112b of the upper plate 112. The inner side surface 112b of the upper plate 112 may refer to a surface of the upper plate 112 facing a first direction.

The protrusion (E) may include a protruding surface 114 that protrudes in the first direction from the inner side surface 112b of the upper plate 112. The protruding surface 114 may be parallel to the upper plate 112. A protrusion (E) including a protruding surface 114 parallel to the upper plate 112 may be easy to manufacture.

According to a preferred embodiment, a recessed portion (C) may be formed on the outer side surface 112a of the upper plate 112. The recessed portion (C) may be defined as a portion recessed toward the interior of the cell case 110 based on the outer side surface 112a of the upper plate 112. The outer side surface 112a of the upper plate 112 may refer to a surface of the upper plate 112 facing in the second direction.

The recessed portion (C) may include a recessed surface 115 that is relatively further recessed in the first direction, as compared with the outer side surface 112a of the upper plate 112. The recessed surface 115 may be parallel to the upper plate 112. A recessed portion (C) including a recessed surface 115 parallel to the upper plate 112 may be easy to manufacture.

In a preferred embodiment, the gasket 161 may be coupled to the through-hole 113 to surround the outer peripheral surface of the protrusion (E) and the recessed portion (C). Therefore, the gasket 161 may be further compressed by the protrusion (E), thereby enhancing sealing capability thereof.

In a preferred embodiment, the gasket 161 may have a first direction thickness T3 in a portion in contact with the protrusion (E) that is smaller than a first direction thickness T4 in a portion in contact with the inner side surface 112b of the upper plate 112. In detail, the first direction gap L3 between the third portion 143 of the electrode terminal 140 and the protruding surface 114 may be smaller than the first direction gap L4 between the third portion 143 of the electrode terminal 140 and the inner side surface 112b of the upper plate 112. For example, the protrusion (E) may further compress the gasket 161, which may improve the sealing capacity of the gasket 161.

According to a preferred embodiment, the first direction thickness T1 of the gasket 161 in the portion contacting the recessed portion (C) may be greater than the first direction thickness T2 of the portion contacting the outer side surface 112a of the upper plate 112. In detail, the first direction gap L1 between the first portion 141 of the electrode terminal 140 and the recessed surface 115 may be greater than the first direction gap L2 between the first portion 141 of the electrode terminal 140 and the outer side surface 112a of the upper plate 112.

When riveting an electrode terminal 140 to an upper plate 112, the thickness of the gasket 161 disposed between the electrode terminal 140 and the upper plate 112 may vary depending on the force applied to the electrode terminal 140. This may also affect the height (G) of the electrode terminal 140. In this case, as the gasket 161 becomes thicker, resistance thereof to force increases, reducing the amount of thickness variation in the gasket 161 and the effect thereof on the height (G) of the electrode terminal 140.

Due to the recessed portion (C), the gasket 161 may be formed to be thicker partially, thereby reducing dimensional errors occurring in the electrode terminal 140. For example, the gasket 161 may have a first direction thickness T1 of a portion in contact with the recessed portion (C), greater than a first direction thickness T2 of a portion in contact with the outer side surface 112a of the upper plate 112. This may reduce a change in the thickness of the gasket 161 when the electrode terminal 140 and the cell case 110 are riveted together, and may also reduce a dimensional error occurring in the electrode terminal 140.

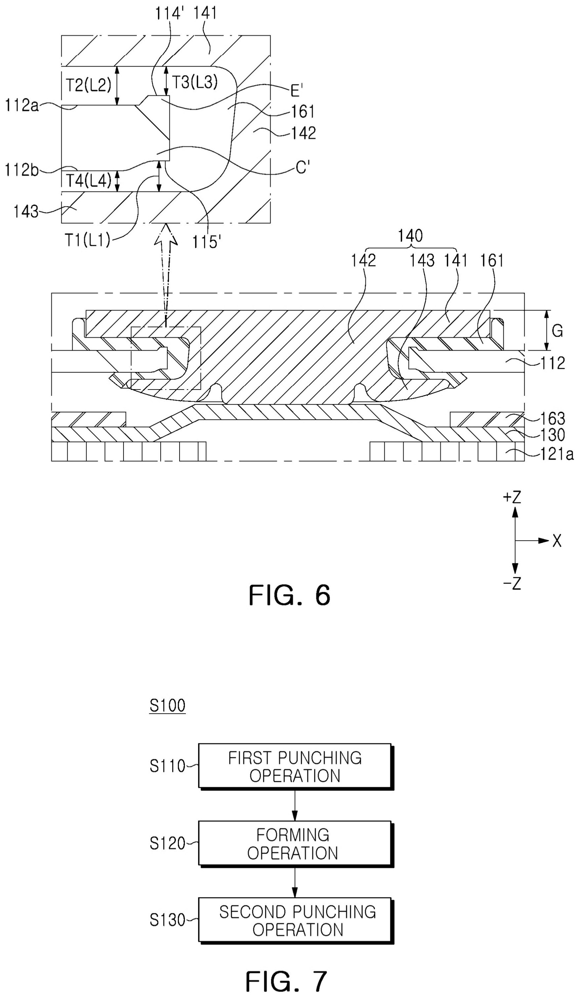

FIG. 6 is a cross-sectional view illustrating another embodiment of FIG. 5.

The descriptions of the cell case 110, electrode assembly 120, first current collector 131, electrode terminal 140, gasket 161, and insulating member 163 of FIGS. 1 to 3 may be applied equally to FIGS. 4 and 5.

In FIG. 6, descriptions of common elements with FIG. 5 will be omitted and differences will be primarily described.

Referring to FIG. 6, according to a preferred embodiment, one direction may be toward the outside of the cell case 110. For example, the protrusion (E') may protrude in a second direction, for example, toward the outside of the cell case 110, and the recessed portion (C') may be recessed in the second direction.

According to a preferred embodiment, the protrusion (E') may be formed on the outer side surface 112a of the upper plate 112. The protrusion (E') may be defined as a portion protruding toward the exterior of the cell case 110 relative to the outer side surface 112a of the upper plate 112.

The protrusion (E') may include a protruding surface 114' that protrudes in a second direction from the outer side surface 112a of the upper plate 112. The protruding surface 114' may be parallel to the upper plate 112. A protrusion (E') that includes a protruding surface 114' parallel to the upper plate 112 may be easy to manufacture.

According to a preferred embodiment, the recessed portion (C') may be formed on the inner side surface 112b of the upper plate 112. The recessed portion (C') may be defined as a portion recessed toward the exterior of the cell case 110 relative to the inner side surface 112b of the upper plate 112.

The recessed portion (C') may include a recessed surface 115' that is relatively further recessed in a second direction, as compared with the inner side surface 112b of the upper plate 112. The recessed surface 115' may be parallel to the upper plate 112. The recessed portion (C') including the recessed surface 115' parallel to the upper plate 112 may be easy to manufacture.

According to a preferred embodiment, the gasket 161 may be coupled to the through-hole 113 to surround the protrusion (E') and the outer peripheral surface of the recessed portion (C'). Therefore, the gasket 161 may be further compressed by the protrusion (E'), thereby improving sealing capability thereof.

According to a preferred embodiment, the gasket 161 may have a second direction thickness T3 of a portion in contact with the protrusion (E') smaller than a second direction thickness T2 of a portion in contact with the outer side surface 112a of the upper plate 112. In detail, the gap L3 between the first portion 141 of the electrode terminal 140 and the protruding surface 114' may be smaller than the gap L2 between the first portion 141 of the electrode terminal 140 and the outer side surface 112a of the upper plate 112. For example, the protrusion (E') may further compress the gasket 161, which may improve the sealing capability of the gasket 161.

According to a preferred embodiment, the second direction thickness T1 of the gasket 161 in the portion in contact with the recessed portion (C') may be greater than the second direction thickness T4 in the portion in contact with the inner side surface 112b of the upper plate 112. In detail, the gap L1 between the third portion 143 of the electrode terminal 140 and the recessed surface 115' may be greater than the gap L4 between the third portion 143 of the electrode terminal 140 and the inner side surface 112b of the upper plate 112.

When riveting the electrode terminal 140 to the upper plate 112, the thickness of the gasket 161 disposed between the electrode terminal 140 and the upper plate 112 may vary depending on the force applied to the electrode terminal 140. This may also affect the height (G) of the electrode terminal 140. At this time, as the thickness of the gasket 161 increases, the resistance thereof to force increases, reducing the thickness variation of the gasket 161 and the effect on the height (G) of the electrode terminal 140.

Due to the recessed portion (C), the gasket 161 may be formed thicker in some portions, thereby reducing dimensional errors occurring in the electrode terminal 140. For example, the second direction thickness T1 of a portion of the gasket 161, contacting the recessed portion (C'), may be greater than the second direction thickness T4 of a portion thereof contacting the inner side surface 112b of the upper plate 112. This reduces the thickness variation of the gasket 161 during the rivet connection between the electrode terminal 140 and the cell case 110, and also reduces dimensional errors occurring in the electrode terminal 140.

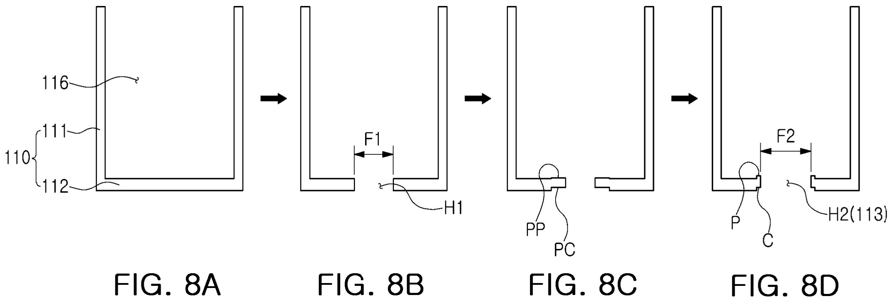

FIG. 7 is a flowchart illustrating a method of manufacturing a cell case according to a preferred embodiment. FIGS. 8A, 8B, 8C and 8D are schematic diagrams illustrating a method of manufacturing a cell case according to a preferred embodiment.

Referring to FIGS. 7, 8A, 8B, 8C and 8D, a method of manufacturing a cell case (S100) according to a preferred embodiment may include a first punching operation (S110) of forming a first hole H1 in an upper plate 112 of a cell case 110, a forming operation (S120) of forming a preliminary protrusion (PP) and a preliminary recessed portion (PC) in the upper plate 112, and a second punching operation (S130) of forming a second hole H2, performed after the forming operation (S120).

The cell case 110 in the first punching operation (S110) may include a side wall 111 and an upper plate 112, forming an accommodation space 116 therein. At this time, the upper plate 112 may not include a through-hole 113. The cell case 110 may have a hollow cylindrical shape with a circular cross-section.

The side wall 111 may have a tube shape, and the upper plate 112 may have a plate shape that covers the top side of the accommodation space 116.

The side wall 111 may have a circular tube shape. The upper plate 112 may have an overall flat plate shape. The thicknesses of the upper plate 112 and the side wall 111 in the cell case 110 may vary. For example, the upper plate 112 and the side wall 111 may have the same thickness, or the thickness of the upper plate 112 may be greater than the thickness of the side wall 111. The cell case 110 may be made of a metal material such as aluminum or an aluminum alloy, but the material of the cell case 110 may be varied.

The side wall 111 and the upper plate 112 of the cell case 110 may be formed integrally. For example, the cell case 110 may be manufactured by deep drawing a metal sheet, thereby forming the side wall 111 and the upper plate 112 into an integral shape.

The first punching operation (S110) may refer to an operation of forming a first hole H1 in the upper plate 112 of the cell case 110. The first hole H1 may be formed through punching, laser cutting, or plasma cutting. However, the aforementioned processing methods are merely examples, and the method of forming the first hole H1 is not limited thereto.

The first punching operation (S110) may improve the dimensional accuracy of the second hole H2 that is ultimately formed. In detail, the method of manufacturing a cell case (S100) of the present disclosure may improve the dimensional accuracy of the second hole H2 that is ultimately formed, compared to a case where the first punching operation (S110) is omitted and only the second punching is performed after forming.

The forming operation (S120) may refer to an operation of forming a preliminary protrusion (PP) and a preliminary recessed portion (PC) in the upper plate 112. The preliminary protrusion (PP) and the preliminary recessed portion (PC) may be formed at the edge of the first hole H1. In detail, the forming operation (S120) may form the preliminary protrusion (PP) and the preliminary recessed portion (PC) by applying pressure using a punch having a diameter larger than the diameter F1 of the first hole H1. In another embodiment of FIG. 6, the direction of pressing using a punch may be opposite to that of the embodiment of FIG. 5. However, the forming method using the punching as above is merely an example, and the forming method of the preliminary protrusion (PP) and the preliminary recessed portion (PC) is not limited thereto.

The second punching operation (S130) may be performed after the forming operation (S120). The second punching operation (S130) may refer to an operation of forming a second hole H2 having a diameter larger than the diameter F1 of the first hole H1 in the preliminary protrusion (PP) and the preliminary recessed portion (PC) formed in the forming operation (S120). In this case, the second hole H2 may refer to a through-hole 113. For example, the diameter F2 of the second hole H2 may be larger than the diameter F1 of the first hole H1. By first drilling a first hole H1 having a smaller diameter than the second hole H2 and then drilling the second hole H2, the dimensional accuracy of the second hole H2 may be improved.

The second hole H2 may be formed through punching, laser cutting, or plasma cutting. However, the aforementioned processing methods are merely examples, and the method for forming the second hole H2 is not limited thereto.

The second punching operation (S130) may improve the dimensional accuracy of the second hole H2 that is ultimately formed. In detail, the method of manufacturing a cell case (S100) of the present disclosure may improve the dimensional accuracy of the second hole H2 that is ultimately formed compared to a case where the second punching operation (S130) is omitted and only forming is performed after punching.

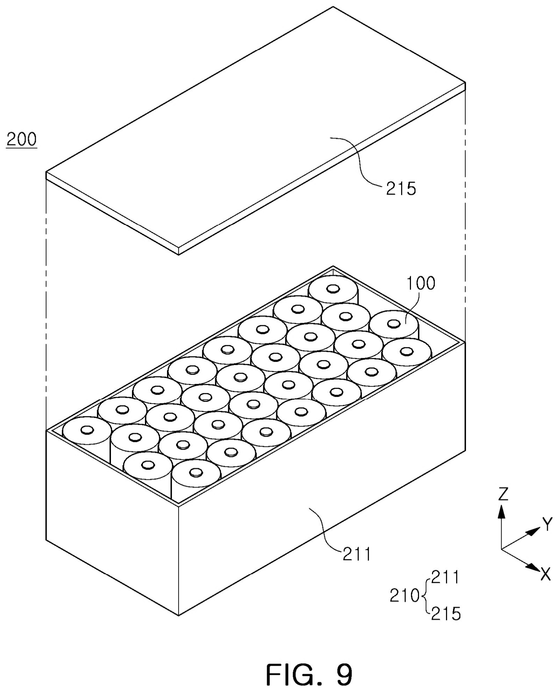

FIG. 9 is a perspective view of a battery module according to a preferred embodiment.

The description of the battery cell 100 in FIGS. 1 to 6 may also be applied to the battery cell 100 provided in the battery module 200 of FIG. 9.

Referring to FIG. 9, a battery module 200 according to a preferred embodiment may include a plurality of battery cells 100 and a module housing 210 that accommodates the plurality of battery cells 100.

The battery module 200 in the present disclosure is not limited in the detailed type as long as it includes a plurality of battery cells 100. For example, the battery module 200 in the present disclosure is defined as including a battery pack, an energy storage device, or the like.

The module housing 210 may provide a space for accommodating the plurality of battery cells 100. The module housing 210 may include a housing body 211 that forms a space for accommodating the plurality of battery cells 100, and a housing cover 215 that covers the upper portions of the plurality of battery cells 100.

As set forth above, in a preferred embodiment, a cell case may be provided that may improve the sealing capability of a gasket.

In a preferred embodiment, dimensional errors in the electrode terminal that occur during the process of coupling the electrode terminal and the cell case may be reduced.

(Aspect 1) A battery cell comprising: a cell case including a side wall providing an accommodation space and an upper plate having a through-hole formed therein; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties, wherein the upper plate includes a protrusion protruding in one direction along an edge of the through-hole and a recessed portion recessed in the one direction.

(Aspect 2) The battery cell of aspect 1, wherein the protrusion protrudes in a first direction that is toward an inside of the cell case, and the recessed portion is recessed in the first direction.

(Aspect 3) The battery cell of aspect 2, wherein the protrusion is provided on an inner side surface of the upper plate, and the recessed portion is formed on an outer side surface of the upper plate.

(Aspect 4) The battery cell of aspect 2 or 3, wherein the gasket has a thickness of a portion in the first direction in contact with the protrusion, smaller than a thickness of a portion in the first direction in contact with an inner side surface of the upper plate.

(Aspect 5) The battery cell of any one of aspects 2 to 4, wherein the gasket has a thickness of a portion in the first direction in contact with the recessed portion, larger than a thickness of a portion in the first direction in contact with an outer side surface of the upper plate.

(Aspect 6) The battery cell of any one of aspects 1 to 5, wherein the protrusion protrudes in a second direction that is toward an outside of the cell case, and the recessed portion is recessed in the second direction.

(Aspect 7) The battery cell of aspect 6, wherein the protrusion is provided on an outer side surface of the upper plate, and the recessed portion is formed on an inner side surface of the upper plate.

(Aspect 8) The battery cell of aspect 6 or 7, wherein the gasket has a thickness in the second direction of a portion in contact with the protrusion, smaller than a thickness in the second direction of a portion in contact with an outer side surface of the upper plate.

(Aspect 9) The battery cell of any one of aspects 6 to 8, wherein the gasket has a thickness in the second direction of a portion in contact with the recessed portion, larger than a thickness in the second direction of a portion in contact with an inner side surface of the upper plate.

(Aspect 10) The battery cell of any one of aspects 1 to 9, wherein the gasket is coupled to the through-hole to surround an outer peripheral surface of the protrusion and the recessed portion.

(Aspect 11) The battery cell of any one of aspects 1 to 10, wherein the side wall includes a circular tube shape, and the upper plate includes a circular plate shape covering one side of the accommodation space, and the cell case is provided by integrating the side wall and the upper plate.

(Aspect 12) The battery cell of any one of aspects 1 to 11, wherein the electrode terminal is riveted to the through-hole of the cell case.

(Aspect 13) A method of manufacturing a cell case, comprising: a first punching operation of forming a first hole in an upper plate of the cell case; forming a preliminary protrusion and a preliminary recessed portion in the upper plate; and a second punching operation of forming a second hole, performed after the forming.

(Aspect 14) The method of aspect 13, wherein a diameter of the second hole is larger than a diameter of the first hole.

(Aspect 15) A battery module comprising: a plurality of battery cells; and a module housing accommodating the plurality of battery cells, wherein at least one of the plurality of battery cells includes, a cell case including a side wall providing an accommodation space and an upper plate having a through-hole formed therein; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties, and the upper plate includes a protrusion protruding in one direction along an edge of the through-hole and a recessed portion recessed in the one direction.

## Claims

1. A battery cell comprising:
a cell case including a side wall providing an accommodation space and an upper plate having a through-hole formed therein;
an electrode assembly disposed in the accommodation space of the cell case;
a first current collector electrically connected to a first electrode tab of the electrode assembly;
an electrode terminal electrically connected to the first current collector through the through-hole; and
a gasket disposed between the electrode terminal and the upper plate and having electrical insulation properties,
wherein the upper plate includes a protrusion protruding in one direction along an edge of the through-hole and a recessed portion recessed in the one direction.

2. The battery cell of claim 1, wherein the protrusion protrudes in a first direction that is toward an inside of the cell case, and
the recessed portion is recessed in the first direction.

3. The battery cell of claim 2, wherein the protrusion is provided on an inner side surface of the upper plate, and
the recessed portion is formed on an outer side surface of the upper plate.

4. The battery cell of claim 2 or 3, wherein the gasket has a thickness of a portion in the first direction in contact with the protrusion, smaller than a thickness of a portion in the first direction in contact with an inner side surface of the upper plate.

5. The battery cell of any one of claims 2 to 4, wherein the gasket has a thickness of a portion in the first direction in contact with the recessed portion, larger than a thickness of a portion in the first direction in contact with an outer side surface of the upper plate.

6. The battery cell of any one of claims 1 to 5, wherein the protrusion protrudes in a second direction that is toward an outside of the cell case, and
the recessed portion is recessed in the second direction.

7. The battery cell of claim 6, wherein the protrusion is provided on an outer side surface of the upper plate, and
the recessed portion is formed on an inner side surface of the upper plate.

8. The battery cell of claim 6 or 7, wherein the gasket has a thickness in the second direction of a portion in contact with the protrusion, smaller than a thickness in the second direction of a portion in contact with an outer side surface of the upper plate.

9. The battery cell of any one of claims 6 to 8, wherein the gasket has a thickness in the second direction of a portion in contact with the recessed portion, larger than a thickness in the second direction of a portion in contact with an inner side surface of the upper plate.

10. The battery cell of any one of claims 1 to 9, wherein the gasket is coupled to the through-hole to surround an outer peripheral surface of the protrusion and the recessed portion.

11. The battery cell of any one of claims 1 to 10, wherein the side wall includes a circular tube shape, and the upper plate includes a circular plate shape covering one side of the accommodation space, and
the cell case is provided by integrating the side wall and the upper plate.

12. The battery cell of any one of claims 1 to 11, wherein the electrode terminal is riveted to the through-hole of the cell case.

13. A method of manufacturing a cell case, comprising:
a first punching operation of forming a first hole in an upper plate of the cell case;
forming a preliminary protrusion and a preliminary recessed portion in the upper plate; and
a second punching operation of forming a second hole, performed after the forming.

14. The method of claim 13, wherein a diameter of the second hole is larger than a diameter of the first hole.

15. A battery module comprising:
a plurality of battery cells; and
a module housing accommodating the plurality of battery cells,
wherein at least one of the plurality of battery cells includes,
a cell case including a side wall providing an accommodation space and an upper plate having a through-hole formed therein;
an electrode assembly disposed in the accommodation space of the cell case;
a first current collector electrically connected to a first electrode tab of the electrode assembly;
an electrode terminal electrically connected to the first current collector through the through-hole; and
a gasket disposed between the electrode terminal and the upper plate and having electrical insulation properties, and
the upper plate includes a protrusion protruding in one direction along an edge of the through-hole and a recessed portion recessed in the one direction.
